# EUROPEAN PATENT APPLICATION

(11) **EP 3 424 632 A1**
(43) Date of publication of application: **09.01.2019**
(21) Application number: 18179321.7
(22) Date of filing: 22.06.2018
(51) Int. Cl.: B23K 9/10, B23K 9/29, B23K 9/32

(54) **PORTABLE AND COMPACT WELDING FUME EXTRACTOR**

(30) Priority: 23.06.2017 US 201762523959 P; 08.03.2018 US 201815915134
(71) Applicant: Lincoln Global, Inc., Santa Fe Springs, CA 90670 (US)
(72) Inventor: Muzilla, David John, Wadsworth, OH Ohio 44281 (US); McQuerry, Steven Earl, Aurora, Ohio 44202 (US)
(74) Representative: Grosse Schumacher Knauer von Hirschhausen

(57) **Abstract**

Embodiments of portable and compact welding fume extractor systems (200) are disclosed. A welding fume extractor system includes a rechargeable battery pack, a controller/user interface configured to control operation of the system (200) and allow a user (300) to interact with the system (200), a filter housing having at least one filter configured to extract welding fume particles from a stream of air forced through the filter housing, and a fan/blower assembly configured to force the stream of air through the filter housing. The rechargeable battery pack is configured to provide electrical power to at least the fan/blower assembly and the controller/user interface. Furthermore, the system (200) is configured to be worn on the back of a human welder (300).

## Description

This patent application claims priority to and the benefit of U.S. provisional patent application serial number 62/523,959 filed on June 23, 2017, which is incorporated herein by reference in its entirety.

### FIELD OF THE INVENTION

The invention is related to a portable and compact fume extractor system according to claim 1, and to a portable and compact combined welder and fume extractor system according to claims 6 and 9. Embodiments of the present invention relate to fume extraction. More specifically, embodiments of the present invention relate to portable and compact fume extraction equipment for welding and other fume-producing activities.

### TECHNICAL BACKGROUND

Today, many fume extractors for welding applications are big and bulky (or smaller, but still not very manageable with respect to moving around and taking up space). Also, fume extractors having any significant blower/suction power typically have to be plugged into an external source of electrical power (e.g., 120 VAC grid or generator power). Such external power sources often limit the locations at which a fume extractor can be set up. There is a need for a fume extractor that is portable, compact, and easy to use in at least a welding environment.

### DESCRIPTION

In order to improve the handling of welding applications, especially of welding applications and fume extractors, a portable and compact fume extractor system according to claim 1 is described and a portable and compact combined welder and fume extractor system according to claims 6 and 9. Preferred embodiments are subject of the subclaims. Embodiments of the present invention include portable and compact fume extractors as well as portable and compact combination welders/fume extractors. In one embodiment, a fume extractor includes a filter housing (including at least one particle filter) sandwiched between a fan/blower assembly and a battery pack. The fume extractor also includes a controller/user interface for controlling and operating the fume extractor. The fume extractor is configured to be worn on a back of a human welder during operation and/or transport in a manner similar to that of a back pack. The battery pack of the fume extractor is rechargeable and provides enough power over the duration of a typical welding operation such that the fan/blower assembly provides sufficient air flow through the fume extractor (i.e., sufficient cubic feet per minute (CFM) to sufficiently extract the fumes produced in the weld area).

In one embodiment, a portable and compact welding fume extractor system is provided. The system includes a rechargeable battery pack, a controller/user interface configured to control operation of the system and allow a user to interact with the system, a filter housing having at least one filter configured to extract welding fume particles from a stream of air forced through the filter housing, and a fan/blower assembly configured to force the stream of air through the filter housing. The rechargeable battery pack is configured to provide electrical power to at least the fan/blower assembly and the controller/user interface. The system also includes a suction hose and nozzle configured to operatively connect to at least one of the fan/blower assembly or the filter housing, either directly or via the controller/user interface, to suck the welding fume particles away from a weld area. Furthermore, the system is configured to be worn on the back of a human welder. In one embodiment, adjustable shoulder straps are provided and are configured to allow the system to be fitted to and worn by the human welder. In one embodiment, the rechargeable battery pack is configured to be removed from the system to be recharged. The fan/blower assembly and the filter housing are positioned within the system between the controller/user interface and the rechargeable battery pack, in accordance with one embodiment.

In one embodiment, a portable and compact combined welder and fume extractor system is provided. The system includes a rechargeable battery pack, a controller/user interface configured to control operation of the system and allow a user to interact with the system, a filter housing having at least one filter configured to extract welding fume particles from a stream of air forced through the filter housing, a fan/blower assembly configured to force the stream of air through the filter housing, and a welding power source configured to generate welding output power for a welding operation. The rechargeable battery pack is configured to provide electrical power to at least the fan/blower assembly, the welding power source, and the controller/user interface. Furthermore, the system is configured to be worn on the back of a human welder. In one embodiment, adjustable shoulder straps are provided and are configured to allow the system to be fitted to and worn by the human welder. The system includes a welding tool and cable configured to operatively connect to the welding power source either directly or via the controller/user interface. The system also includes a workpiece clamp and cable configured to operatively connect to the welding power source either directly or via the controller/user interface. A suction hose and nozzle are provided and configured to operatively connect to at least one of the fan/blower assembly or the filter housing, either directly or via the controller/user interface, to suck the welding fume particles away from a weld area. In one embodiment, the rechargeable battery pack is configured to be removed from the system to be recharged. The welding power source is an inverter-based power source, in accordance with one embodiment. The fan/blower assembly, the filter housing, and the welding power source are positioned within the system between the controller/user interface and the rechargeable battery pack, in accordance with one embodiment.

In one embodiment, a portable and compact combined welder and fume extractor system is provided. The system includes a controller/user interface configured to control operation of the system and allow a user to interact with the system, a filter housing having at least one filter configured to extract welding fume particles from a stream of air forced through the filter housing, a fan/blower assembly configured to force the stream of air through the filter housing, and a welding power source configured to be plugged into an external source of electrical power, generate welding output power for a welding operation, and provide electrical power to at least the fan/blower assembly and the controller/user interface. In one embodiment, the external source of electrical power is one of an electrical grid or a portable generator. The system is configured to be worn on the back of a human welder. In one embodiment, adjustable shoulder straps are provided and are configured to allow the system to be fitted to and worn by the human welder. The system includes a welding tool and cable configured to operatively connect to the welding power source either directly or via the controller/user interface. The system also includes a workpiece clamp and cable configured to operatively connect to the welding power source either directly or via the controller/user interface. A suction hose and nozzle are provided and configured to operatively connect to at least one of the fan/blower assembly or the filter housing, either directly or via the controller/user interface, to suck the welding fume particles away from a weld area. In one embodiment, the welding power source is an inverter-based power source.

Numerous aspects of the general inventive concepts will become readily apparent from the following detailed description of exemplary embodiments, from the claims, and from the accompanying drawings.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or that multiple elements may be designed as one element. In some embodiments, an element shown as an internal component of another element may be implemented as an external component and vice versa. Furthermore, elements may not be drawn to scale.
FIG. 1 illustrates an embodiment of a portable and compact welding fume extractor system;
FIG. 2 illustrates a first embodiment of a portable and compact combined welder and fume extractor system;
FIG. 3 illustrates a human welder wearing the portable and compact combined welder and fume extractor system of FIG. 2 on a back of the human welder in a similar manner to how a back pack is worn;
FIG. 4 illustrates a second embodiment of a portable and compact combined welder and fume extractor system; and
FIG. 5 illustrates a block diagram of an example embodiment of a controller/user interface of the embodiments of FIGS. 1-4.

### DETAILED DESCRIPTION

Embodiments of systems and methods for performing fume extraction are disclosed. In one embodiment, a fume extractor includes and is powered by a rechargeable battery pack. The fume extractor is portable, compact, and configured to be worn on the back of a human welder. In another embodiment, a combined welder and fume extractor includes and is powered by a rechargeable battery pack. The combined welder and fume extractor is portable, compact, and configured to be worn on the back of a human welder. In yet another embodiment, a combined welder and fume extractor is powered by an external power source.

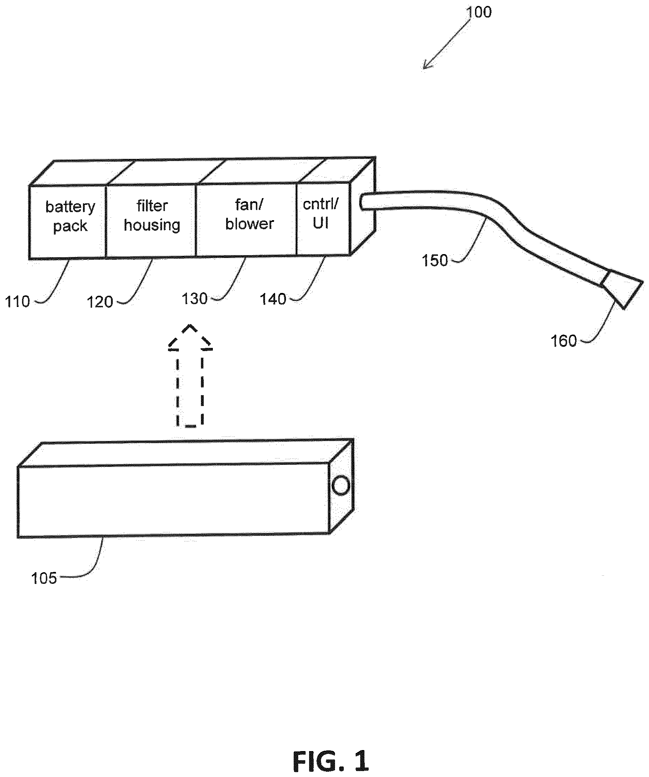

The examples and figures herein are illustrative only and are not meant to limit the subject invention, which is measured by the scope and spirit of the claims. Referring now to the drawings, wherein the showings are for the purpose of illustrating exemplary embodiments of the subject invention only and not for the purpose of limiting same, FIG. 1 illustrates one embodiment of a portable and compact welding fume extractor system 100. The portable and compact welding fume extractor system 100 is configured to be used in a closed space at an extremely localized remote location, as well as other types of spaces and locations. The portable and compact welding fume extractor system 100 may be used while welding, soldering, or brazing, for example. The terms "weld", "welding", or "welder" are used generically herein (unless otherwise specified) and, therefore, can also refer to soldering, brazing, and other methods and equipment for joining metals or filling gaps in metals.

Referring to FIG. 1, the fume extractor system 100 includes a battery pack 110, a filter housing 120 (housing at least one filter), a fan/blower assembly 130, and a controller/user interface (CUI) 140. In accordance with one embodiment, at least the battery pack 110, the filter housing 120 (housing at least one filter), and the fan/blower assembly 130 are enclosed within an external housing 105. The external housing 105 may be made of, for example, aluminum to minimize the weight of the fume extractor system 100. In accordance with another embodiment, each of the battery pack 110, the filter housing 120 (housing at least one filter), the fan/blower assembly 130, and the controller/user interface (CUI) 140 is a module having its own housing. The modules are configured to mechanically and electrically connect to and disconnect from each other. In one embodiment, the fan/blower assembly 130 and the filter housing 120 are positioned within the system 100 between the controller/user interface 140 and the rechargeable battery pack 110 as shown in FIG. 1.

The fume extractor system 100 also includes a hose 150 and a suction nozzle 160. The hose 150 may be attachable and detachable from the fume extractor system 100, in accordance with one embodiment. For example, in one embodiment, the hose 150 is configured to operatively connect to the fan/blower assembly 130, either directly or via the controller/user interface 140. In another embodiment, the hose 150 is configured to operatively connect to the filter housing 120, either directly or via the controller/user interface 140.

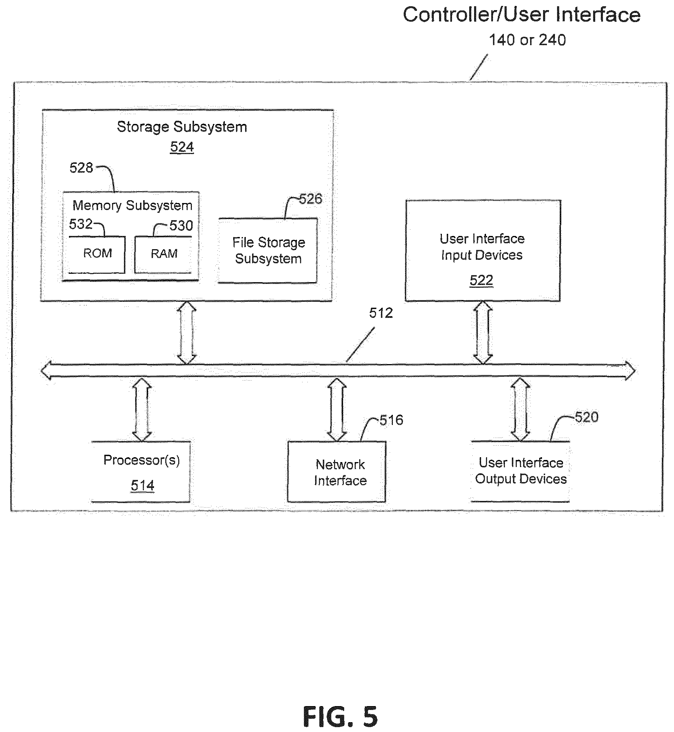

During operation, air which contains fume particles (a.k.a., fumes, for example, from a welding operation) is sucked into the hose 150 via the suction nozzle 160 as the fan/blower assembly 130 operates. The air is forced to be streamed and filtered through the filter housing 120 by the fan/blower assembly 130 to remove the fumes. Subsequently, the filtered air (i.e., clean air) is exhausted. The CUI 140 controls the operation of the fume extractor system 100 and allows a user to interact with the fume extractor system 100 (e.g., to set a speed or CFM of the fan/blower assembly 130). One embodiment of the CUI 140 is described with respect to FIG. 5 herein.

The filter housing 120 may include one or more filters to filter the fumes (fume particles) out of the air. The filter technology may provide car cabin level or hygiene level filtering. The filters may include, for example, an ultra-low penetration air (ULPA) filter or a high efficiency particulate air (HEPA) filter. Other types of filters are possible as well, in accordance with other embodiments. The filter housing 120 may include stages of multiple filters, in accordance with one embodiment. Each filter stage is configured to remove fume particulates of particular sizes and/or types. For example, in one embodiment, a HEPA filter is followed by a ULPA filter within the filter housing 120.

The battery pack 110 of the fume extractor system 100 provides electrical power to at least the fan/blower assembly 130 and the CUI 140. The battery pack 110, when starting at a full charge, provides enough electrical power to allow the fume extractor 100 to suck up and filter out the fumes produced during a welding operation in a weld zone over the time duration of a typical welding operation (i.e., provides enough suction flow or CFM). For example, in one embodiment, the battery pack 110 provides enough electrical power to continuously suck up and filter out the fumes produced during a gas metal arc welding (GMAW) welding operation over a 30 minute period of time. In accordance with one embodiment, the battery pack 110 uses lithium-ion technology. Other types of battery pack technologies may be used instead, in accordance with other embodiments.

In one embodiment, the battery pack 110 is removable from the fume extractor system 100 such that the battery pack can be placed in a docking station to be recharged. In another embodiment, the battery pack 110 may be recharged while still connected to the fume extractor 100 system (e.g., via an electrical power cord/cable connected between the battery pack 110 and a 120 VAC electrical outlet). In yet another embodiment, when the battery pack 110 is removed from the fume extractor system 100 and placed in a docking station to be recharged, an electrical power cord/cable (e.g., from a 120 VAC electrical outlet) can be plugged into the fume extractor system 100 to operate the fume extractor system 100 while the battery pack 110 is recharging.

In one embodiment, the CUI 140 includes logic in the form of circuitry and/or software (i.e., computer-executable instructions) executing on a processor such that the fan speed of the fan/blower assembly 130 changes to maintain a constant CFM (e.g., fan speed increases as the filter(s) clogs). Maintaining a constant CFM may result in using more electrical power from the battery pack 110 in certain circumstances over a determined period of time. Therefore, in one embodiment, the battery pack 110 is configured to take into account the extra electrical power usage that may be used, for example, as the filter clogs.

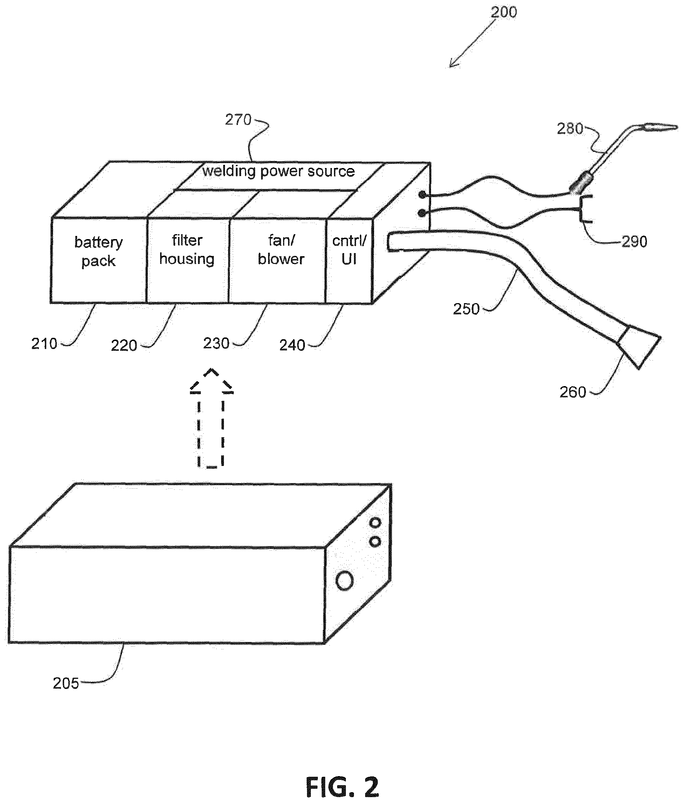

FIG. 2 illustrates a first embodiment of a portable and compact combined welder and fume extractor system 200. The combined welder and fume extractor system 200 includes a battery pack 210, a filter housing 220, a fan/blower assembly 230, a hose 250, and a suction nozzle 260, similar to corresponding elements 110, 120, 130, 150 and 160 of the fume extractor system 100 in FIG. 1. The combined welder and fume extractor system 200 also includes a welding power source 270, a welding tool and cable 280, and a workpiece clamp and cable 290. As with the fume extractor system 100, the combined welder and fume extractor system 200 can have an external housing 205 or can be modular with individual housings.

The term "welding tool" is used generically herein (unless otherwise specified) and can refer to a wire fed gun, a stick electrode and clamp, a non-consumable tungsten electrode and holder, a brazing torch, or a soldering torch, for example. Other types of welding tools are possible as well. In one embodiment, the welding tool and cable 280 are configured to operatively connect to the welding power source 270, for example, either directly or via the controller/user interface 240. Similarly, the workpiece clamp and cable 290 are configured to operatively connect to the welding power source 270, for example, either directly or via the controller/user interface 240.

The welding power source 270 is configured to facilitate a human welder in performing one or more welding operations by generating welding output power. Such welding operations may include, for example, gas metal arc welding (GMAW), gas tungsten arc welding (GTAW), shielded metal arc welding (SMAW), brazing, or soldering. For example, in one embodiment, the welding tool and cable 280 is configured to receive a consumable welding wire from a wire feeder located, for example, remotely from the combined welder and fume extractor 200 during a GMAW welding operation. Other types of welding operations are possible as well, in accordance with other embodiments. In one embodiment, the welding power source 270 is an inverter-based power source. Other types of welding power sources are possible as well, in accordance with other embodiments.

The combined welder and fume extractor system 200 further includes a controller/user interface (CUI) 240 configured to control the operation of the combined welder and fume extractor system 200 and allow a user to interact with the combined welder and fume extractor system 200 (e.g., to set a speed or CFM of the fan/blower assembly 230, and to select a welding mode and a welding current of the welding power source 270). In one embodiment, the welding tool and cable 280 and the workpiece clamp and cable 290 are configured to plug into the CUI 240 to interface to the welding power source 270.

In accordance with one embodiment, the combined welder and fume extractor system 200 is integrated such that the battery pack 210 and the CUI 240 are shared by the welding power source portion and the fume extractor portion of the combined welder and fume extractor system 200 as shown in FIG. 2. In accordance with other embodiments, the combined welder and fume extractor system may have a separate battery pack and/or CUI for each of the welding power source portion and the fume extractor portion. One embodiment of the CUI 240 is described with respect to FIG. 5 herein.

The filter housing 220 may include one or more filters to filter the fumes (fume particles) out of the air. The filter technology may provide car cabin level or hygiene level filtering. The filters may include, for example, an ultra-low penetration air (ULPA) filter or a high efficiency particulate air (HEPA) filter. Other types of filters are possible as well, in accordance with other embodiments. The filter housing 220 may include stages of multiple filters, in accordance with one embodiment. Each filter stage is configured to remove fume particulates of particular sizes and/or types. For example, in one embodiment, a HEPA filter is followed by a ULPA filter within the filter housing 220. The hose 250 may be attachable and detachable from the system 200, in accordance with one embodiment. For example, in one embodiment, the hose 250 is configured to operatively connect to the fan/blower assembly 230, either directly or via the controller/user interface 240. In another embodiment, the hose 250 is configured to operatively connect to the filter housing 220, either directly or via the controller/user interface 240.

The battery pack 210 of the combined welder and fume extractor system 200 provides electrical power to at least the fan/blower assembly 230, the CUI 240, and the welding power source 270. In one embodiment, the fan/blower assembly 230, the filter housing 220, and the welding power source 270 are positioned within the system 200 between the controller/user interface 240 and the rechargeable battery pack 210. The battery pack 210, when starting at a full charge, provides enough electrical power to allow the combined welder and fume extractor system 200 to perform a welding operation (i.e., provides enough electrical welding current) and suck up and filter out the fumes produced during the welding operation (i.e., provides enough suction flow or CFM) in a weld zone (area) over the time duration of a typical welding operation. For example, in one embodiment, the battery pack 210 provides enough electrical power to continuously suck up and filter out the fumes produced while performing a gas metal arc welding (GMAW) operation using the welding power source 270 over a 15 minute period of time. In accordance with one embodiment, the battery pack 210 uses lithium-ion technology. Other types of battery pack technologies may be used instead, in accordance with other embodiments.

In one embodiment, the battery pack 210 is removable from the combined welder and fume extractor system 200 such that the battery pack 210 can be placed in a docking station to be recharged. In another embodiment, the battery pack 210 may be recharged while still connected to the combined welder and fume extractor system 200 (e.g., via an electrical power cord/cable connected between the battery pack 210 and a 120 VAC electrical outlet). In yet another embodiment, when the battery pack 210 is removed from the combined welder and fume extractor system 200 and placed in a docking station to be recharged, an electrical power cord/cable (e.g., from a 120 VAC electrical outlet) can be plugged into the combined welder and fume extractor system 200 to operate the combined welder and fume extractor system 200 while the battery pack 210 is recharging.

In one embodiment, the CUI 240 includes logic in the form of circuitry and/or software (i.e., computer-executable instructions) executing on a processor such that the fan speed of the fan/blower assembly 230 changes to maintain a constant CFM (e.g., fan speed increases as the filter(s) clogs). Maintaining a constant CFM may result in using more electrical power from the battery pack 210 in certain circumstances over a determined period of time. Therefore, in one embodiment, the battery pack 210 is configured to take into account the extra electrical power usage that may be used, for example, as the filter clogs. Furthermore, in one embodiment, the battery pack 210 is configured to take into account the selected welding mode of operation of the welding power source 270 and provide enough welding current for the selected mode of operation while maintaining a constant CFM, for example.

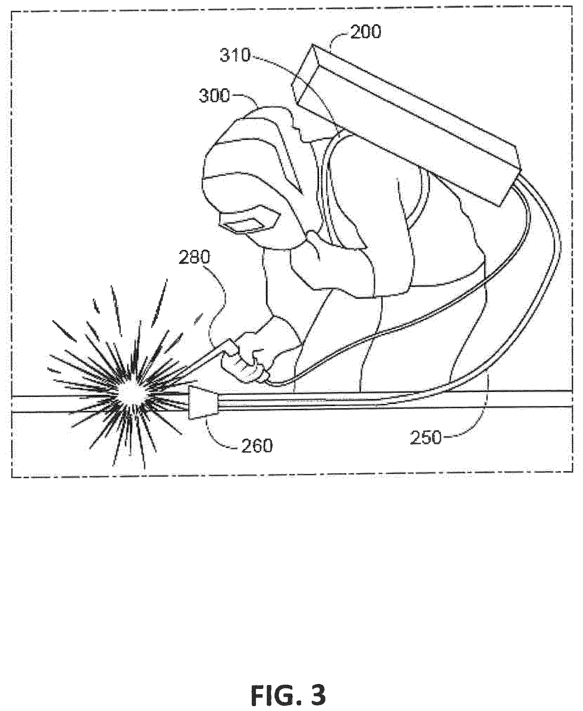

FIG. 3 illustrates a human welder 300 wearing the portable and compact combined welder and fume extractor system 200 of FIG. 2 on a back of the human welder 300 in a similar manner to how a back pack is worn. In one embodiment, adjustable shoulder straps 310 are provided to allow the combined welder and fume extractor system 200 to be fitted to and worn by the human welder 300. In accordance with one embodiment the weight of the combined welder and fume extractor system 200 is less than about 15 kg or 30 lbs. In this manner, the human welder 300 can more easily get into, for example, closed spaces at extremely localized remote locations to perform a welding operation. In one embodiment, the portable and compact welding fume extractor system 100 of FIG. 1 may be configured to be worn on the back of a human welder in a similar manner.

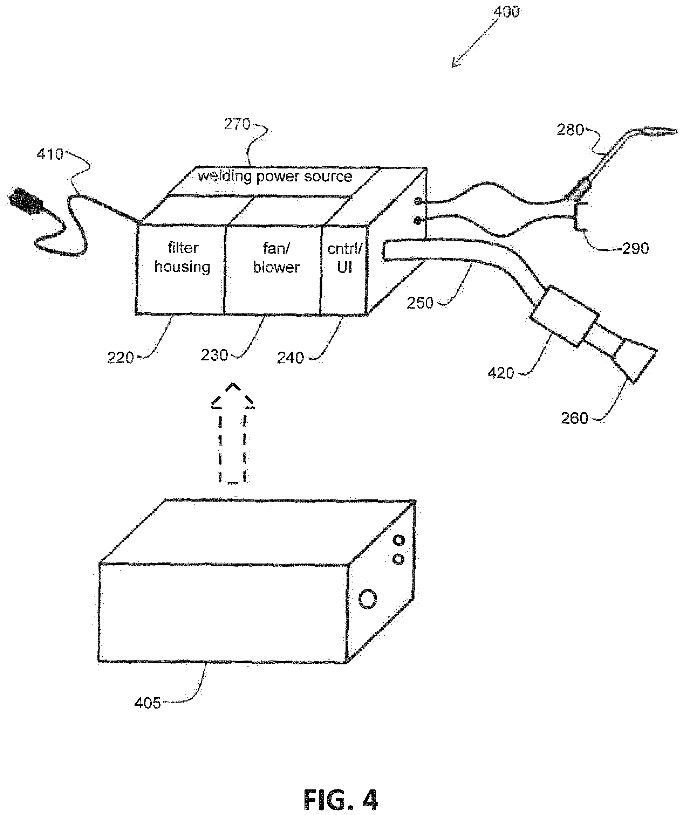

FIG. 4 illustrates a second embodiment of a portable and compact combined welder and fume extractor system 400. The combined welder and fume extractor system 400 of FIG. 4 is similar to the combined welder and fume extractor system 200 of FIG. 2 except that the combined welder and fume extractor system 400 of FIG. 4 is not powered by a battery pack. Instead, the combined welder and fume extractor system 400 of FIG. 4 is configured to plug into an electrical outlet of an external source of electrical power via an electrical power cable/cord 410 to receive electrical power. The external source of electrical power may be an electrical grid or a portable generator, for example. In one embodiment, the welding power source 270 is configured to be plugged into an external source of electrical power, generate welding output power for a welding operation, and provide electrical power to at least the fan/blower assembly 230 and the controller/user interface 240.

In one embodiment, the combined welder and fume extractor system 400 includes a spark arrestor 420 integrated with or attached to the hose 250. In other embodiments, the spark arrestor 420 may be located elsewhere within the system 400. For example, in one embodiment, the spark arrestor 420 may be sandwiched between the filter housing 220 and the fan/blower assembly 230, where the filter housing 220 is downstream of the fan/blower assembly 230. The spark arrestor is configured to cool sparks and embers that may get sucked into the nozzle 260 during a welding operation. In this manner, a fire can be prevented from occurring in, for example, the filter housing 220 due to the sparks and embers.

In accordance with one embodiment, the spark arrestor 420 includes a plurality of metal meshes that catch the sparks and embers, allowing them to cool and extinguish before passing into the rest of the system as particles. In accordance with another embodiment, the spark arrestor 420 includes a centrifugal force device that pulls the sparks and embers onto a metal wall, allowing them to cool and extinguish. The spark arrestor 420 is controlled and powered via the CUI 240, in accordance with one embodiment.

FIG. 5 illustrates a block diagram of an example embodiment of a controller/user interface (CUI) (e.g., 140 or 240) of the embodiments of FIGS. 1-4. The CUI 140 or 240 includes at least one processor 514 (e.g., a central processing unit, a graphics processing unit) which communicates with a number of peripheral devices via bus subsystem 512. These peripheral devices may include a storage subsystem 524, including, for example, a memory subsystem 528 and a file storage subsystem 526, user interface input devices 522, user interface output devices 520, and a network interface subsystem 516. The input and output devices allow user interaction with the CUI 140 or 240. Network interface subsystem 516 provides an interface to outside networks and is coupled to corresponding interface devices in other devices.

User interface input devices 522 may include push buttons, a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the CUI 140 or 240 or onto a communication network.

User interface output devices 520 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the CUI 140 or 240 to the user or to another machine or computer system.

Storage subsystem 524 stores programming and data constructs that provide some or all of the functionality described herein. For example, computer-executable instructions and data are generally executed by processor 514 alone or in combination with other processors. Memory 528 used in the storage subsystem 524 can include a number of memories including a main random access memory (RAM) 530 for storage of instructions and data during program execution and a read only memory (ROM) 532 in which fixed instructions are stored. A file storage subsystem 526 can provide persistent storage for program and data files, and may include a hard disk drive, a floppy disk drive along with associated removable media, a CD-ROM drive, an optical drive, or removable media cartridges. The computer-executable instructions and data implementing the functionality of certain embodiments may be stored by file storage subsystem 526 in the storage subsystem 524, or in other machines accessible by the processor(s) 514.

Bus subsystem 512 provides a mechanism for letting the various components and subsystems of the CUI 140 or 240 communicate with each other as intended. Although bus subsystem 512 is shown schematically as a single bus, alternative embodiments of the bus subsystem may use multiple buses.

The CUI 140 or 240 can be of varying types. Due to the ever-changing nature of computing devices and networks, the description of the CUI 140 or 240 depicted in FIG. 5 is intended only as a specific example for purposes of illustrating some embodiments. Many other configurations of the CUI are possible, having more or fewer components than the CUI 140 or 240 depicted in FIG. 5.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims, which satisfy the statutory subject matter requirements of 35 U.S.C. §101. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the spirit and scope of the general inventive concepts, as defined by the appended claims, and equivalents thereof.

**REFERENCE NUMBERS**

| | | | |
|---|---|---|---|
| | | 270 | welding power source |
| | | 280 | welding tool and cable |
| 100 | fume extractor system | 290 | workpiece clamp and cable |
| 105 | external housing | 300 | human welder |
| 110 | battery pack | 310 | shoulder strap |
| 120 | filter housing | 400 | fume extractor system |
| 130 | fan/blower assembly | 410 | power cable |
| 140 | controller/user interface | 420 | spark arrestor |
| 150 | hose | 512 | bus subsystem |
| 160 | suction nozzle | 514 | processor |
| 200 | fume extractor system | 516 | network interface subsystem |
| 205 | external housing | 520 | output device |
| 210 | battery pack | 522 | input device |
| 220 | filter housing | 524 | storage subsystem |
| 230 | fan/blower assembly | 526 | file storage subsystem |
| 240 | controller/user interface | 528 | memory subsystem |
| 250 | hose | 530 | random access memory |
| 260 | suction nozzle | 532 | read only memory |

## Claims

1. A portable and compact fume extractor system (100, 200, 400), the system (100, 200, 400) comprising:
a rechargeable battery pack (110, 210);
a controller/user interface (140, 240) configured to control operation of the system (100, 200, 400) and allow a user to interact with the system (100, 200, 400);
a filter housing (120, 220) having at least one filter configured to extract welding fume particles from a stream of air forced through the filter housing (120, 220); and
a fan/blower assembly (130, 230) configured to force the stream of air through the filter housing (120, 220);
wherein the rechargeable battery pack (110, 210) is configured to provide electrical power to at least the fan/blower assembly (130, 230) and the controller/user interface (140, 240), and
wherein the system (100, 200, 400) is configured to be worn on the back of a human welder (300).

2. The system (100, 200, 400) of claim 1, further comprising a suction hose (150, 250) and nozzle (160, 260) configured to operatively connect to at least one of the fan/blower assembly (130, 230) or the filter housing (120, 220), either directly or via the controller/user interface (140, 240), to suck the welding fume particles away from a weld area.

3. The system (100, 200, 400) of claim 1 or 2, further comprising adjustable shoulder straps (310) configured to allow the system (100, 200, 400) to be fitted to and worn by the human welder (300).

4. The system (100, 200, 400) of any of the claims 1 to 3, wherein the rechargeable battery pack (110, 210) is configured to be removed from the system (100, 200, 400) to be recharged.

5. The system (100, 200, 400) of any of the claims 1 to 4, wherein the fan/blower assembly (130, 230) and the filter housing (120, 220) are positioned within the system (100, 200, 400) between the controller/user interface (140, 240) and the rechargeable battery pack (110, 210).

6. A portable and compact combined welder and fume extractor system (100, 200, 400), the system (100, 200, 400) comprising:
a rechargeable battery pack (110, 210);
a controller/user interface (140, 240) configured to control operation of the system ( 100, 200, 400) and allow a user to interact with the system (100, 200, 400);
a filter housing (120, 220) having at least one filter configured to extract welding fume particles from a stream of air forced through the filter housing (120, 220);
a fan/blower assembly (130, 230) configured to force the stream of air through the filter housing (120, 220); and
a welding power source (270) configured to generate welding output power for a welding operation,
wherein the rechargeable battery pack (110, 210) is configured to provide electrical power to at least the fan/blower assembly (130, 230), the welding power source (270), and the controller/user interface (140, 240), and
wherein the system (100, 200, 400) is configured to be worn on the back of a human welder (300).

7. The system (100, 200, 400) of claim 6, wherein the rechargeable battery pack (110, 210) is configured to be removed from the system (100, 200, 400) to be recharged.

8. The system (100, 200, 400) of claim 6 or 7, wherein the fan/blower assembly (130, 230), the filter housing (120, 220), and the welding power source (270) are positioned within the system (100, 200, 400) between the controller/user interface (140, 240) and the rechargeable battery pack (110, 210).

9. A portable and compact combined welder and fume extractor system (100, 200, 400), the system (100, 200, 400) comprising:
a controller/user interface (140, 240) configured to control operation of the system (100, 200, 400) and allow a user to interact with the system (100, 200, 400);
a filter housing (120, 220) having at least one filter configured to extract welding fume particles from a stream of air forced through the filter housing (120, 220);
a fan/blower assembly (130, 230) configured to force the stream of air through the filter housing (120, 220); and
a welding power source (270) configured to be plugged into an external source of electrical power, generate welding output power for a welding operation, and provide electrical power to at least the fan/blower assembly (130, 230) and the controller/user interface (140, 240),
wherein the system (100, 200, 400) is configured to be worn on the back of a human welder (300).

10. The system (100, 200, 400) of any of the claims 6 to 9, further comprising a welding tool and cable (280) configured to operatively connect to the welding power source (270) either directly or via the controller/user interface (140, 240).

11. The system (100, 200, 400) of any of the claims 6 to 10, further comprising a workpiece clamp and cable (290) configured to operatively connect to the welding power source (270) either directly or via the controller/user interface (140, 240).

12. The system (100, 200, 400) of any of the claims 6 to 11, further comprising a suction hose (250) and nozzle (260) configured to operatively connect to at least one of the fan/blower assembly (130, 230) or the filter housing (120, 220), either directly or via the controller/user interface (140, 240), to suck the welding fume particles away from a weld area.

13. The system (100, 200, 400) of any of the claims 6 to 12, further comprising adjustable shoulder straps (310) configured to allow the system (100, 200, 400) to be fitted to and worn by the human welder (300).

14. The system (100, 200, 400) of any of the claims 6 to 13, wherein the welding power source (270) is an inverter-based power source.

15. The system (100, 200, 400) of any of the claims 9 to 14, wherein the external source of electrical power is one of an electrical grid or a portable generator.
